(19) 

Europäisches
Patentamt
European
Patent Office
Office européen
des brevets

(11) **EP 3 214 874 B1**

(12) **EUROPEAN PATENT SPECIFICATION**

(45) Date of publication and mention
of the grant of the patent:
**08.05.2019 Bulletin 2019/19**

(51) Int Cl.:
**H04W 52/02** *(2009.01)*　　**G06N 3/02** *(2006.01)*

(21) Application number: **16158039.4**

(22) Date of filing: **01.03.2016**

(54) **SENSORIC SYSTEM ENERGY LIMITER WITH SELECTIVE ATTENTION NEURAL NETWORK**

ENERGIEBEGRENZER EINES SENSORISCHEN SYSTEMS MIT EINEM NEURONALEN
NETZWERK MIT SELEKTIVER AUFMERKSAMKEIT

LIMITEUR D'ÉNERGIE DU SYSTÈME SENSORIEL À RÉSEAU NEURONAL D'APPEL D'ATTENTION
SÉLECTIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.09.2017 Bulletin 2017/36**

(73) Proprietor: **Gigaset Communications GmbH
40549 Düsseldorf (DE)**

(72) Inventor: **HUK, Maciej
52-311 Wroclaw (PL)**

(74) Representative: **Michalski Hüttermann & Partner
Patentanwälte mbB
Speditionstraße 21
40221 Düsseldorf (DE)**

(56) References cited:
**CN-A- 102 238 705　　US-A1- 2008 071 713
US-A1- 2009 046 538**

EP 3 214 874 B1

**Description**

The present invention relates to energy saving of electric devices achieved by using selective attention of a neural network.

With the appearance of microelectronics, as sensor nodes became cheaper, smaller and lower weight, their batteries became smaller too. Monitoring weather conditions and other physical and logical parameters of various systems and environments often require usage of electrically powered, simple, complex or smart remote sensors that collect the required data for further processing by the sensor or by an external system which collects the data from one or more sensors with use of wireless or wired communication.

In many cases it is important that the sensor can operate as long as possible powered with battery or other not renewable power source. This can be because of very limited access to the sensor after its deployment or due to the need to limit cost of battery replacement and to reduce probability that sensor will not work when it should due to lack of energy.

Thus there is a problem of constructing the electrically powered sensors in a way that will increase maximal sensor operation time without battery replacement, without reducing sensors functionality and with decreasing number of problems with missing data from the sensor. Usually a sensoring device is a system consisting from two or more subsystems, e.g. sensors, effectors, data processing units etc., which can be turned on or not. In many applications it is crucial to keep as many device subsystems turned off for as long as possible to maximize device operational time. Typically devices are equipped with low power processor that realizes algorithm which turns on needed subsystems in proper situations depending on the state of device surroundings. Design of such algorithm is crucial for the functioning and operational time of the device.

In CN102238705 A a wireless sensor network topology control method based on an artificial neural network (ANN) is shown. The method is characterized in that the aim of saving energy is achieved by simulating an information processing system of a biological neutral network; when the total vector of the signals input by senor nodes is more than the threshold of a neurone, the neurone is activated and gives out pulses, thus outputting the signals; the nodes are selected to become the cluster heads according to the output signals and the dump energy to primarily form a network topology map; other nodes select the nearest cluster heads and join in the clusters and transfer own information to the cluster heads; the network topology map is optimized in combination with power control; and the transmitting power of the cluster heads is controlled so as to balance the number of the sensor nodes covered by the network, thus reducing collision during communication and improving the communication efficiency.

Up to now various algorithms were used for such purposes giving devices the possibility to react efficiently in most typical situations. The problem was previously solved in many ways depending on the place of sensor application and available resources. The sensor battery operation time was maximized by the use of (one or more) solutions such as:

- low power triggers that turn-on the sensor or its subsystems when needed (e.g. time, pressure, vibrational or temperature triggers, such as e.g. properly adjusted thermomechanical bimetal electrical switch),

- multiple low power modes of the most energy consuming subsystems (e.g. microprocessors),

- long-living high capacity battery packs (where applicable),

- built-in energy generators that use energy sources available in the place of the sensor deployment (e.g. photovoltaic, thermoelectric, electromagnetic, mechanical, piezoelectric, chemical or thermonuclear energy generators) sometimes connected with energy accumulators (electrical, mechanical, chemical, biochemical, etc.),

- battery usage in the way that will maximize sensor operation time (e.g. in some setups it is better to use the battery without breaks, to not let it cool down as it could result in lower or no energy availability),

- sensors constructed with use of elements with needed functionality (e.g. microprocessors) that use as minimal amounts of energy as possible, due to their proper design, subcomponents selection and/or manufacturing processes (e.g. dedicated microprocessors produced in a very large scale of integration from dedicated materials),

- methods that are automatically adjusting the speed or time (e.g. delaying) the data processing inside the sensor and/or the information transfer to other sensors and/or systems (e.g. delaying the radio transfer in the case of temporary high radio static conditions),

- methods that are automatically adjusting data transfer time and routing through other systems(e.g. sensors) to minimize data transfer energy costs,

- grouping, compressing or dividing the data into parts to optimize the energy cost of transferring data to other systems,

- methods that are informing other systems about sensor battery low energy levels to allow for differentiation between physical sensor failure from not working due to the lack of energy,

- built-in subsystems of active energy acquisition, e.g. by movement of the sensors part, or a whole sensor within the given area to places where it can gain more energy (e.g. sun following system that controls photovoltaic panel to maximize the energy generation),

- automatic methods of selection of the most important data that should be collected, and/or stored and/or processed and/or transferred to other systems

In the field of automatic selection of the most important data that should be collected and/or processed, among neural networks with distributed selective attention properties are used such as those which use artificial neurons with aggregation functions such as:

- Sigma-Pi aggregation function described by Feldman, J. A., & Ballard, D. H. (1982). Connectionist models and their properties. Cognitive Science, 6, 205-254 and Rumelhart DE., Hinton GE., McClelland JL. (1986), A general framework for parallel distributed processing, In: Parallel distributed processing: explorations in the microstructure of cognition, vol. 1, pp. 45-76 and Mel BW. Koch C. (1990) Sigma-Pi learning: on radial basis functions and cortical associative learning, In: Advances in neural information processing systems, vol. 2, pp. 474-481, Morgan Kaufmann Publishers Inc. San Francisco, CA, USA

- Clusteron aggregation function described by Mel BW. (1992), The clusteron: toward a simple abstraction for a complex neuron. In Advances in neural information processing systems, vol. 4, J. Moody, S. Hanson, & R. Lippmann, (Eds.), San Mateo, CA: Morgan Kaufmann, pp. 35-42.

- Product unit aggregation function described by Durbin R., Rumelhart DE. (1989) Product units: a computationally powerful and biologically plausible extension to backpropagation networks, In: Neural Computation Journal, vol. 1, no. 1, pp. 133-142, MIT Press Cambridge, MA, USA

- Spratling-Hayes aggregation function described by Spratling MW., Hayes GM. (2000) Learning synaptic clusters for non-linear dendritic processing. Neural Processing Letters, vol. 11, no. 1, pp: 17-27

- Sigma-if aggregation function described by Maciej Huk (2009) Learning distributed selective attention strategies with the Sigma-if neural network, Advances in Computer Science and IT, D M Akbar Hussain (Ed.), ISBN: 978-953-7619-51-0, INTECH, chap. 12, pp. 209-232 and Maciej Huk (2012) Backpropagation generalized delta rule for the selective attention Sigma-if artificial neural network. International Journal of Applied Mathematics and Computer Science, vol. 22, pp. 449-459.

One advantage of the neural network approach is that most of the intense computation takes place during the training process. Once the neural network is trained for a particular task its operation is relatively fast. But the above mentioned polynomial and nonlinear aggregation functions different from Sigma-if solution, have all one common fundamental disadvantage: in every situation they require reading in of all input signals, regardless of their importance. Thus their selective attention abilities are very limited when compared to properties of natural systems. As both synchronous and asynchronous neuron signals aggregation schemes do not provide general and precise models of selective attention, it is an objection of the invention to make use of a hybrid solution which is synchronous, and read in and analysis signals in a step by step manner.

It is the object of the invention to save energy of electric devices by using selective attention of a neural network in an efficient way.

In that way, that the neural network is configured to select which of the electric devices is to be operated and has selective attention properties by representing output signals of the electric devices as data vectors $X = [X_1, X_2,..., X_N]$ and aggregating the input signals of the hidden neurons for the given data vectors not in one but in a series of $K$ steps, where constant $K$ is the predefined number of groups of neuron inputs, as a result of that the dendrite of each hidden neuron is divided into $K$ distinct groups, by complementing each i-th input connection with an integer parameter $\theta_i \in \{0,...,K - 1\}$, determining membership in one of the groups.

In one preferred embodiment of the invention $K$ is a function of the neuron's grouping vector $\theta^T = [\theta_1, \theta_2,..., \theta_N]$ given by:

$$K(\boldsymbol{\theta}) = \max_{i=1}^{N} \theta_i$$

and during each step $k$ from 0 to $K$ - 1 the neuron accumulates data belonging to one selected group, such that

$$\theta_i = k.$$

In one preferred embodiment of the invention the partial activation $\Delta\varphi_k$ is determined as a weighted sum of input signals and the Kroneckers's delta given by:

$$\Delta\varphi_k(\boldsymbol{\omega}, \boldsymbol{x}, \boldsymbol{\theta}) = \sum_{i=1}^{N} \omega_i x_i \delta(k, \theta_i)$$

In one preferred embodiment of the invention the hidden neurons use a recursive conditional aggregation function.

In one preferred embodiment of the invention the recursive conditional aggregation function is given by:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) + \varphi_{k-1}(\boldsymbol{\omega}, \boldsymbol{x}, \boldsymbol{\theta}) & : k \geq 0 \\ 0 & : k < 0 \end{cases}$$

where:

- $\varphi_k$ is the neuron activation at the $k$-th step of data aggregation
- $\omega, \boldsymbol{x}, \theta$ are the vectors of neuron input weights, input values and inputs grouping, respectively
- $\varphi^*$ is the constant real value, e.g. from range 0.4 to 2.0
- $k$ is the value used for numbering steps of data aggregation
- $H(x)$ is the Heaviside function giving value 1 for $x \geq 0$ and 0 otherwise.

In one preferred embodiment of the invention the hidden neurons use a quasi-randomized recursive conditional aggregation function.

In one preferred embodiment of the invention the formula of the said quasi-randomized recursive conditional aggregation function is given by:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) H\left(\omega - k + \mathrm{rnd}(k)\right) + \varphi_{k-1}(\boldsymbol{\omega}, \boldsymbol{x}, \boldsymbol{\theta}) & : k \geq 0 \\ 0 & : k < 0 \end{cases}$$

where:

- $\varphi_k$ is the neuron activation at the $k$-th step of data aggregation
- $\omega, \boldsymbol{x}, \theta$ are the vectors of neuron input weights, input values and inputs grouping, respectively
- $\varphi^*$ is the constant real value. e.g. from range 0.4 to 2.0
- $k$ is the value used for numbering steps of data aggregation
- $H(x)$ is the Heaviside-Function giving value 1 for $x \geq 0$ and 0 otherwise
- $\mathrm{rnd}(x)$ is the function giving random (or pseudorandom) natural value from range 0 to x.

In one preferred embodiment of the invention the value of the aggregation function is treated as the neuronal activation value where actual activation $\varphi_k$ is not calculated if actual activation $\varphi_{k-1}$ derived from respective inputs groups exceeds a preselected aggregation threshold $\varphi^*$.

In one preferred embodiment of the invention the neuron output Y is calculated with use of the standard activation function F e.g. sigmoidal, binomials step function etc.

$$Y(\boldsymbol{\omega}, \boldsymbol{x}, \boldsymbol{\theta}) = F(\varphi_K(\boldsymbol{\omega}, \boldsymbol{x}, \boldsymbol{\theta}))$$

In one preferred embodiment of the invention the network is trained with generalized error backpropagation algorithm, described in: Maciej Huk (2012) "Backpropagation generalized delta rule for the selective attention Sigma-if artificial neural network". International Journal of Applied Mathematics and Computer Science, vol. 22, pp. 449-459.

In one preferred embodiment of the invention at least one device producing input data for given input of the artificial neural network is turned on when neural network needs its output data for calculation of aggregation function value and turned off in other cases.

In one preferred embodiment of the invention the information determining membership of neural network inputs in one of the groups is represented as vector independent from the vector of inputs weights, or is derived from the vector of inputs weights or other information by suitable formula.

For a more complete understanding of the invention, reference is made to the following description and accompanying drawings, in which:

Fig.1 is a schematic representation of an artificial neuron with 3 inputs ($x_1$, $x_2$, $x_3$) and 1 output, wherein $\omega_1$, $\omega_2$, $\omega_3$ are the neuron input weights and each i-th input connection is complemented with an integer parameter $\theta_i$.

Fig.2 is a schematic example architecture of the artificial neural network with 4 inputs, 2 outputs, and 3 hidden neurons, wherein the function $\omega$ defines the weights, where $\omega((i,j))$, the weight of the connection between neuron i and neuron j, is shortened to $\omega_{ij}$.

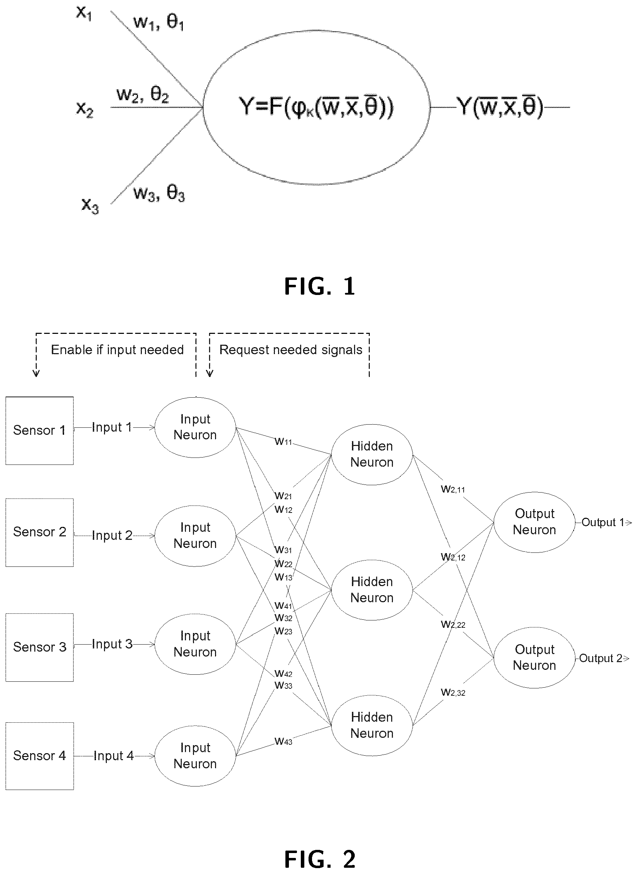

With reference to Fig. 2, it is shown a schematic example architecture of the artificial neural network in which 4 sensors are connected to 4 inputs of the input neurons, 2 outputs, and 3 hidden neurons. When the hidden neuron of the selective attention neural network calculates its activation in the given situation, it decides which inputs are needed to be aggregated for this task. Due to this, not needed neuron inputs are not requested by the neuron. In the effect, network inputs not requested by all hidden neurons are not needed at all, and sensors connected with those inputs do not need to be activated. This can radically reduce energy consumption of the whole system and limit processed data to the most important data only. The network outputs can be used to check if there is a need for transmitting data to the other systems.

The neural network can be simulated on sequential or parallel computing devices, built with electronic, electrical, electromechanical, mechanical, biochemical or biological parts.

Therefore in one preferred embodiment the energy saving of electric devices is achieved by using selective attention of a neural network in that way, that the neural network is configured to select which of the electric devices is to be operated and has selective attention properties by representing output signals of the electric devices as data vectors $X = [X_1, X_2,..., X_N]$ and aggregating the input signals of the hidden neurons for the given data vectors not in one but in a series of $K$ steps, where constant $K$ is the predefined number of groups of neuron input, as a result of that the dendrite of each hidden neuron is divided into $K$ distinct groups, by complementing each i-th input connection with an integer parameter $\theta_i \in \{0,...,K - 1\}$, determining membership in one of the groups. Where $K$ a function of the neuron's grouping vector $\theta^{\boldsymbol{T}} = [\theta_1, \theta_2,..., \theta_N]$ given by:

$$K(\boldsymbol{\theta}) = \max_{i=1}^{N} \theta_i$$

and during each step $k$ from 0 to $K$ - 1 the neuron accumulates data belonging to one selected group, such that

$$\theta_i = k.$$

The hidden neurons use a quasi-randomized recursive conditional aggregation function which is given by:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) H\left(\omega - k + \mathrm{rnd}(k)\right) + \varphi_{k-1}(\boldsymbol{\omega}, \boldsymbol{x}, \boldsymbol{\theta}) & : k \geq 0 \\ 0 & : k < 0 \end{cases}$$

wherein the partial activation $\Delta\varphi_k$ is determined as a weighted sum of input signals and the Kroneckers's delta given by:

$$\Delta \varphi_k(\boldsymbol{\omega}, \boldsymbol{x}, \boldsymbol{\theta}) = \sum_{i=1}^{N} \omega_i x_i \delta(k, \theta_i).$$

For the neuron with the above mentioned aggregation function the whole activation is calculated as $\varphi_k(\omega, \boldsymbol{x}, \theta)$, where constant $K$ is the predefined number of groups of neuron inputs. The neuron output Y is calculated with use of the standard activation function F (e.g. sigmoidal, binomials step function etc.) as

$$Y(\boldsymbol{\omega}, \boldsymbol{x}, \boldsymbol{\theta}) = F(\varphi_K(\boldsymbol{\omega}, \boldsymbol{x}, \boldsymbol{\theta}))$$

Weight vectors $\omega$ and grouping vector $\theta$ are calculated during training process of the artificial neural network with the generalized error backpropagation algorithm as described by Maciej Huk (2012) in "Backpropagation generalized delta rule for the selective attention Sigma-if artificial neural network". International Journal of Applied Mathematics and Computer Science, vol. 22, pp. 449-459.

As an example for complex sensors the energy saving is gained by the above mentioned invention e.g. by decreasing the frequency of use of physical sensors (e.g. accelerometer) and other data sources (e.g. accessible through radio link) and in the effect decrease of the energy cost of sensors use and data computation, by decreasing problems of missing data from physical sensors or other data sources, in situations when selective attention neural network will decide to not use the missing data, by increasing of the accuracy of the complex sensor decisions if/when to store the source data or processed data, and/or send it to the other system, by using only the most important data to make the decisions, as not using less important data can also exclude noise and errors existing in the omitted data.

Furthermore as an example for a system of complex and/or simple and/or intelligent sensors the energy saving is gained by the above mentioned invention e.g. by decreasing the frequency of communication between the complex sensors and other systems (e.g. centralized data processing system or sensors network output node), reducing the use of sensors batteries and transmission channel and decreasing the communication with the direct user of the complex sensor and/or the system.

## Claims

1. System comprising at least two electric devices and an artificial, feed forward, neural network, with one hidden layer of neurons
   **characterized in that,**
   the neural network is configured to select which of the electric devices is to be operated and has selective attention properties by representing output signals of the electric devices as data vectors $\boldsymbol{X} = [X_1, X_2,..., X_N]$ and aggregating the input signals of the hidden neurons for the given data vectors not in one but in a series of $K$ steps, where constant $K$ is the predefined number of groups of neuron input, as a result of that the dendrite of each hidden neuron is divided into $K$ distinct groups, by complementing each $i$-th input connection with an integer parameter $\theta_i \in \{0, ... , K - 1\}$, determining membership in one of the groups.

2. System of claim 1, wherein $K$ is a function of the neuron's grouping vector $\theta^T = [\theta_1, \theta_2,..., \theta_N]$ given by:

$$K(\boldsymbol{\theta}) = \max_{i=1}^{N} \theta_i$$

   and during each step $k$ from 0 to $K - 1$ the neuron accumulates data belonging to one selected group, such that

$$\theta_i = k.$$

3. System of claim 2, wherein the partial activation $\Delta \varphi_k$ is determined as a weighted sum of input signals and the Kroneckers's delta given by:

$$\Delta\varphi_k(\boldsymbol{\omega}, \boldsymbol{x}, \boldsymbol{\theta}) = \sum_{i=1}^{N} \omega_i x_i \delta(k, \theta_i)$$

**4.** System of claim 3, wherein hidden neurons use a recursive conditional aggregation function.

**5.** System of claim 4, wherein the formula of the said recursive conditional aggregation function is given by:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) + \varphi_{k-1}(\boldsymbol{\omega}, \boldsymbol{x}, \boldsymbol{\theta}) & : k \geq 0 \\ 0 & : k < 0 \end{cases}$$

where:

$\varphi_k$ is the neuron activation at the $k$-th step of data aggregation
$\omega$, $\boldsymbol{x}$, $\theta$ are the vectors of neuron input weights, input values and inputs grouping, respectively
$\varphi^*$ is the constant real value. e.g. from range 0.4 to 2.0
$k$ is the value used for numbering steps of data aggregation
$H(x)$ is the Heaviside-Function giving value 1 for $x \geq 0$ and 0 otherwise

**6.** System of claim 3, wherein hidden neurons use a quasi-randomized recursive conditional aggregation function.

**7.** System of claim 6, wherein the formula of the said quasi-randomized recursive conditional aggregation function is given by:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) H\left(\omega - k + \mathrm{rnd}(k)\right) + \varphi_{k-1}(\boldsymbol{\omega}, \boldsymbol{x}, \boldsymbol{\theta}) & : k \geq 0 \\ 0 & : k < 0 \end{cases}$$

where:

$\varphi_k$ is the neuron activation at the $k$-th step of data aggregation
$\omega$, $\boldsymbol{x}$, $\theta$ are the vectors of neuron input weights. input values and inputs grouping, respectively
$\varphi^*$ is the constant real value. e.g. from range 0.4 to 2.0
$k$ is the value used for numbering steps of data aggregation
$H(x)$ is the Heaviside-Function giving value 1 for $x \geq 0$ and 0 otherwise
$\mathrm{rnd}(x)$ is the function giving random (or pseudorandom) natural value from range 0 to x

**8.** System of claim 5 or 7, wherein the value of the aggregation function is treated as the neuronal activation value where actual activation $\varphi_k$ is not calculated if actual activation $\varphi_{k\sim1}$ derived from respective inputs groups exceeds a preselected aggregation threshold $\varphi^*$.

**9.** System of claim 8, wherein the neuron output $Y$ is calculated with use of the standard activation function $F$ e.g. sigmoidal, binomials step function etc.

$$Y(\boldsymbol{\omega}, \boldsymbol{x}, \boldsymbol{\theta}) = F(\varphi_K(\boldsymbol{\omega}, \boldsymbol{x}, \boldsymbol{\theta}))$$

**10.** System of one of the former claims, wherein the network is trained with generalized error backpropagation algorithm.

**11.** System of claim 9 or 10, wherein at least one device producing input data for given input of the artifical neural network is turned on when neural network needs its output data for calculation of aggregation function value and turned off in other cases.

**12.** System of claim 11, wherein the information determining membership of neural network inputs in one of the groups is represented as vector independent from the vector of inputs weights, or is derived from the vector of inputs weights or other information by suitable formula.

**Patentansprüche**

1. System mit mindestens zwei elektrischen Geräten und einem künstlichen neuronalen Feedforward-Netzwerk mit einer verborgenen Neuronenschicht,

   **dadurch gekennzeichnet, dass**
   das neuronale Netzwerk dafür konfiguriert ist, auszuwählen, welches der elektrischen Geräte betrieben werden soll, und selektive Aufmerksamkeitseigenschaften aufweist durch Darstellen von Ausgangssignalen der elektrischen Geräte als Datenvektoren $\boldsymbol{X} = [X_1, X_2,..., X_N]$ und Aggregieren der Eingangssignale der verborgenen Neuronen für die vorgegebenen Datenvektoren nicht in einem, sondern in einer Folge von $K$ Schritten, wobei die Konstante $K$ die vordefinierte Anzahl von Gruppen von Neuroneneingaben ist, wobei als Ergebnis davon der Dendrit jedes verborgenen Neurons in $K$ verschiedene Gruppen geteilt wird, indem jede $i$-te Eingabeverbindung durch einen ganzzahligen Parameter $\theta_i \in \{0, ..., K\text{-}1\}$ ergänzt wird, wodurch die Zugehörigkeit zu einer der Gruppen bestimmt ist.

2. System nach Anspruch 1, wobei $K$ eine Funktion des Gruppierungsvektors $\theta^T = [\theta_1, \theta_2, ..., \theta N]$ des Neurons ist, die gegeben ist durch:

$$K(\boldsymbol{\theta}) = \max_{i=1}^{N} \theta_i$$

   wobei während jedes Schritts $k$ von 0 bis $K$ - 1 das Neuron Daten ackumuliert, die zu einer ausgewählten Gruppe gehören, so dass

$$\theta_i = k$$

   ist.

3. System nach Anspruch 2, wobei die Teilaktivierung $\Delta\varphi_k$ als eine gewichtete Summe von Eingangssignalen bestimmt ist und das Kronecker-Delta gegeben ist durch:

$$\Delta\varphi_k(\boldsymbol{\omega}, \boldsymbol{x}, \boldsymbol{\theta}) = \sum_{i=1}^{N} \omega_i x_i \delta(k, \theta_i) .$$

4. System nach Anspruch 3, wobei verborgende Neuronen eine rekursive bedingte Aggregationsfunktion verwenden.

5. System nach Anspruch 4, wobei die Formel der rekursiven bedingten Aggregationsfunktion gegeben ist durch:

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) + \varphi_{k-1}(\boldsymbol{\omega}, \boldsymbol{x}, \boldsymbol{\theta}) & : k \geq 0 \\ 0 & : k < 0 \end{cases},$$

   wobei:

   $\varphi_k$ die Neuronenaktivierung im $k$-ten Schritt der Datenaggregation bezeichnet,
   $\omega, \boldsymbol{x}, \theta$ die Vektoren der Neuroneneingabegewichte, Eingabewerte bzw. eine Eingabegruppierung bezeichnen;
   $\varphi^*$ den konstanten Realwert z.B. im Bereich von 0,4 bis 2,0 bezeichnet;
   $k$ den zum Nummerieren von Schritten der Datenaggregation verwendeten Wert bezeichnet; und
   $H(x)$ den Wert der Heaviside-Funktion bezeichnet, 1 für $x \geq 0$ und andernfalls 0.

**6.** System nach Anspruch 3, wobei verborgene Neuronen eine quasi-randomisierte rekursive bedingte Aggregationsfunktion verwenden.

**7.** System nach Anspruch 6, wobei die Formel der quasi-randomisierten rekursiven bedingten Aggregationsfunktion gegeben ist durch:

$$\varphi_k = \begin{cases} \Delta\varphi_k(\boldsymbol{\omega}, \boldsymbol{x}, \boldsymbol{\theta}) \cdot H(\varphi^* - \varphi_{k-1}(\boldsymbol{\omega}, \boldsymbol{x}, \boldsymbol{\theta})) H(\omega - k + \mathrm{rnd}(k)) + \varphi_{k-1}(\boldsymbol{\omega}, \boldsymbol{x}, \boldsymbol{\theta}) & : k \geq 0 \\ 0 & : k < 0 \end{cases},$$

wobei

$\varphi_k$ die Neuronenaktivierung im $k$-ten Schritt der Datenaggregation bezeichnet,
$\boldsymbol{\omega}, \boldsymbol{x}, \theta$ die Vektoren der Neuroneneingabegewichte, Eingabewerte bzw. eine Eingabegruppierung bezeichnen;
$\varphi^*$ den konstanten Realwert z.B. im Bereich von 0,4 bis 2,0 bezeichnet;
$k$ den zum Nummerieren von Schritten der Datenaggregation verwendeten Wert bezeichnet;
$H(x)$ den Wert der Heaviside-Funktion bezeichnet, 1 für x $\geq$ 0 und andernfalls 0; und
rnd($x$) den zufälligen (oder pseudozufälligen) natürlichen Wert der Funktion im Bereich von 0 bis $x$ bezeichnet.

**8.** System nach Anspruch 5 oder 7, wobei der Wert der Aggregationsfunktion als der neuronale Aktivierungswert behandelt wird, wobei die tatsächliche Aktivierung $\varphi_k$ nicht berechnet wird, wenn die tatsächliche Aktivierung $\varphi_{k-1}$, die von jeweiligen Eingabegruppen abgeleitet ist, einen vorgewählten Aggregationsschwellenwert $\varphi^*$ überschreitet.

**9.** System nach Anspruch 8, wobei die Neuronenausgabe $Y$ unter Verwendung der Standardaktivierungsfunktion $F$, z.B. sigmoide Funktion, binomiale Sprungfunktion usw., berechnet wird

$$Y(\boldsymbol{\omega}, \boldsymbol{x}, \boldsymbol{\theta}) = F(\varphi_K(\boldsymbol{\omega}, \boldsymbol{x}, \boldsymbol{\theta})).$$

**10.** System nach einem der vorhergehenden Ansprüche, wobei das Netzwerk mit einem generalisierten Fehler-Backpropagation-Algorithmus trainiert wird.

**11.** System nach Anspruch 9 oder 10, wobei mindestens ein Gerät, das Eingabedaten für eine vorgegebene Eingabe des künstlichen neuronalen Netzwerks erzeugt, eingeschaltet wird, wenn das neuronale Netzwerk seine Ausgabedaten zum Berechnen des Aggregationsfunktionswerts benötigt, und andernfalls ausgeschaltet ist.

**12.** System nach Anspruch 11, wobei die Information, die die Zugehörigkeit neuronaler Netzwerkeingaben zu einer der Gruppen bestimmt, als Vektor unabhängig vom Vektor von Eingabewichten dargestellt wird oder durch eine geeignete Formel vom Vektor von Eingabewichten oder von anderer Information hergeleitet wird.

**Revendications**

**1.** Système comprenant au moins deux dispositifs électriques et un réseau neuronal artificiel sans rétroaction, avec une couche cachée de neurones
**caractérisé en ce que**
le réseau neuronal est configuré pour choisir lequel parmi les dispositifs électriques doit être utilisé et a des propriétés d'attention sélective par la représentation de signaux de sortie des dispositifs électriques sous la forme vecteurs de données $\boldsymbol{X} = [X_1, X_2,..., X_N]$ et par l'agrégation des signaux d'entrée des neurones cachés pour les vecteurs de données donnés non pas en une étape mais en une série de $K$ étapes, où la constante $K$ est le nombre prédéfini de groupes d'entrée de neurones, en tant que résultat de ce que la dendrite de chaque neurone caché est divisée en $K$ groupes distincts, en venant compléter chaque $i^{\text{ème}}$ connexion d'entrée par un paramètre entier $\theta_i \in \{0, ..., K - 1\}$, déterminant ainsi l'appartenance à l'un des groupes.

**2.** Système selon la revendication 1, dans lequel $K$ est une fonction du vecteur de regroupement des neurones $\theta^T = [\theta_1, \theta_2, ..., \theta_N]$ donné par :

$$K(\boldsymbol{\theta}) = \max_{i=1}^{N} \theta_i$$

et au cours de chaque étape $k$ allant de 0 à $K$ - 1, le neurone accumule des données appartenant à l'un des groupes choisis, de sorte que

$$\theta_i = k.$$

3. Système selon la revendication 2, dans lequel l'activation partielle $\Delta\varphi_k$ est déterminée en tant que somme pondérée des signaux d'entrée et le delta de Kronecker est donné par :

$$\Delta\varphi_k(\boldsymbol{\omega}, \boldsymbol{x}, \boldsymbol{\theta}) = \sum_{i=1}^{N} \omega_i x_i \delta(k, \theta_i).$$

4. Système selon la revendication 3, dans lequel les neurones cachés utilisent une fonction d'agrégation conditionnelle récursive.

5. Système selon la revendication 4, dans lequel la formule de ladite fonction d'agrégation conditionnelle récursive est donnée par :

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) + \varphi_{k-1}(\boldsymbol{\omega}, \boldsymbol{x}, \boldsymbol{\theta}) & : k \geq 0 \\ 0 & : k < 0 \end{cases}$$

où

$\varphi_k$ représente l'activation des neurones à la $k$ième étape de l'agrégation des données,
$\omega, \boldsymbol{x}, \theta$ représentent les vecteurs des poids d'entrée des neurones, les valeurs d'entrée et le regroupement des entrées, respectivement,
$\varphi^*$ représente la valeur réelle constante, par exemple dans la plage de 0,4 à 2,0,
$k$ représente la valeur utilisée pour les étapes de numérotation de l'agrégation des données,
$H(x)$ représente la fonction de Heaviside donnant la valeur 1 dans le cas où $x \geq 0$ et 0 dans le cas contraire.

6. Système selon la revendication 3, dans lequel les neurones cachés utilisent une fonction d'agrégation conditionnelle récursive quasi aléatoire.

7. Système selon la revendication 6, dans lequel la formule de ladite fonction d'agrégation conditionnelle récursive est donnée par :

$$\varphi_k = \begin{cases} \Delta\varphi_k(\boldsymbol{\omega}, \boldsymbol{x}, \boldsymbol{\theta}) \cdot H\left(\varphi^* - \varphi_{k-1}(\boldsymbol{\omega}, \boldsymbol{x}, \boldsymbol{\theta})\right) H\left(\omega - k + \mathrm{rnd}(k)\right) + \varphi_{k-1}(\boldsymbol{\omega}, \boldsymbol{x}, \boldsymbol{\theta}) & : k \geq 0 \\ 0 & : k < 0 \end{cases}$$

où :

$\varphi_k$ représente l'activation des neurones à la $k$ième étape de l'agrégation des données,
$\omega, \boldsymbol{x}, \theta$ représentent les vecteurs des poids d'entrée des neurones, les valeurs d'entrée et le regroupement des entrées, respectivement,
$\varphi^*$ représente la valeur réelle constante, par exemple dans la plage de 0,4 à 2,0,
$k$ représente la valeur utilisée pour les étapes de numérotation de l'agrégation des données,
$H(x)$ représente la fonction de Heaviside donnant la valeur 1 dans le cas où $x \geq 0$ et 0 dans le cas contraire,
$\mathrm{rnd}(x)$ représente la fonction donnant la valeur naturelle aléatoire (ou pseudo aléatoire) dans la plage de 0 à $x$.

**8.** Système selon la revendication 5 ou la revendication 7, dans lequel la valeur de la fonction d'agrégation est traitée en tant que valeur d'activation des neurones où l'activation réelle $\varphi_k$ n'est pas calculée si l'activation réelle $\varphi_{k-1}$, issue des groupes d'entrée respectifs, dépasse un seuil d'agrégation $\varphi^*$ préalablement choisi.

**9.** Système selon la revendication 8, dans lequel la sortie des neurones $Y$ est calculée en utilisant la fonction d'activation standard $F$, par exemple une fonction d'étape binomiale, sigmoïdale, etc.

$$Y(\omega, x, \theta) = F(\varphi_K((\omega, x, \theta)).$$

**10.** Système selon l'une quelconque des revendications précédentes, dans lequel le réseau subit un apprentissage avec un algorithme de rétro propagation généralisée des erreurs.

**11.** Système selon la revendication 9 ou la revendication 10, dans lequel au moins un dispositif générant les données d'entrée pour une entrée donnée du réseau de neurones artificiel est mis en service lorsque le réseau de neurones a besoin de ses données de sortie pour le calcul de la valeur de la fonction d'agrégation et est mis hors service dans tous les autres cas.

**12.** Système selon la revendication 11, dans lequel l'information déterminant l'appartenance des entrées du réseau de neurones à l'un des groupes est représentée en tant que vecteur indépendant par rapport au vecteur des poids des entrées, ou est issue du vecteur des poids des entrées ou d'une autre information par une formule appropriée.

$$Y = F(\varphi_\kappa(\overline{w}, \overline{x}, \overline{\theta}))$$

$$Y(\overline{w}, \overline{x}, \overline{\theta})$$

# FIG. 1

# FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FELDMAN, J. A. ; BALLARD, D. H.** Connectionist models and their properties. *Cognitive Science,* 1982, vol. 6, 205-254
- **RUMELHART DE. ; HINTON GE. ; MCCLELLAND JL.** In: Parallel distributed processing: explorations in the microstructure of cognition. *A general framework for parallel distributed processing,* 1986, vol. 1, 45-76
- In: Advances in neural information processing systems. **MEL BW. KOCH C.** Sigma-Pi learning: on radial basis functions and cortical associative learning. Morgan Kaufmann Publishers Inc, 1990, vol. 2, 474-481
- In Advances in neural information processing systems. **MEL BW.** The clusteron: toward a simple abstraction for a complex neuron. Morgan Kaufmann, 1992, vol. 4, 35-42
- Product units: a computationally powerful and biologically plausible extension to backpropagation networks. **DURBIN R. ; RUMELHART DE.** In: Neural Computation Journal. MIT Press Cambridge, 1989, vol. 1, 133-142
- **SPRATLING MW. ; HAYES GM.** Learning synaptic clusters for non-linear dendritic processing. *Neural Processing Letters,* 2000, vol. 11 (1), 17-27
- Learning distributed selective attention strategies with the Sigma-if neural network. **MACIEJ HUK.** Advances in Computer Science and IT. 2009, 209-232
- **MACIEJ HUK.** Backpropagation generalized delta rule for the selective attention Sigma-if artificial neural network. *International Journal of Applied Mathematics and Computer Science,* 2012, vol. 22, 449-459